(19) Europäisches Patentamt
European Patent Office
Office européen des brevets

(11) Publication number: **0 081 005**
**B1**

(12) # EUROPEAN PATENT SPECIFICATION

(45) Date of publication of patent specification: **09.12.87**

(51) Int. Cl.[4]: **C 08 J 9/08** // (C08J9/08, C08L25:00)

(21) Application number: **81110228.4**

(22) Date of filing: **08.12.81**

(54) **Improved alkenyl aromatic-olefinically unsaturated acid foams and process for preparation.**

(43) Date of publication of application:
**15.06.83 Bulletin 83/24**

(45) Publication of the grant of the patent:
**09.12.87 Bulletin 87/50**

(84) Designated Contracting States:
**BE CH DE FR GB IT LI NL SE**

(56) References cited:
**EP-A-0 033 016**
**CA-A- 844 652**
**GB-A-1 058 376**
**GB-A-1 454 579**

(73) Proprietor: **THE DOW CHEMICAL COMPANY**
**2030 Dow Center Abbott Road P.O. Box 1967**
**Midland, MI 48640 (US)**

(72) Inventor: **Park, Chung Poo**
**8762 Stoneridge Court**
**Pickerington Ohio (US)**
Inventor: **Suh, Kyung Won**
**1533 Welsh Hills Road**
**Granville Ohio (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

**EP 0 081 005 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Extruded plastics foams have become important items of commerce utilized as thermal insulation and decoration. One of the more popular extruded plastics foams is polystyrene foam. It has been recognized that it would be desirable to have improved styrene polymer foam having a higher heat distortion temperature, greater solvent resistance and having a wider latitude in preparation. Extruded alkenyl aromatic polymer foams generally are prepared using substantial quantities of halocarbons as volatile fluid foaming agents. Depending on the particular volatile fluid foaming agent or mixture employed, the halocarbon will sooner or later diffuse from the foam and enter the atmosphere. There has been considerable semiscientific speculation as to the long term effects of such halogens being released into the atmosphere. In view of the current energy crisis, larger and larger volumes of extruded plastics foam and thermal insulation will be desired and required. One convenient solution to the halo-hydrocarbon problem would be to employ carbon dioxide as a blowing agent. However, certain technical drawbacks exist which make the use of carbon dioxide as a blowing agent undesirable.

CA—A—844 652 refers to expandable polymer compositions forming a low density cellular foam when water is used as sole blowing agent. The water can be introduced into the composition by blending with a hydrated inorganic salt.

In GB—A—1058 376 a foamable styrene polymer composition is described which comprises a combination of a solid organic acid and a carbon dioxide liberating agent which is a synergistic combination of a carbonate and a bicarbonate. There is mentioned that the foam structure produced by carbon dioxide liberating agents as blowing agents is unsatisfactory, especially when styrene polymeric compositions containing copolymers are used. The system being satisfactory for styrene copolymers to be worked at temperatures above 190°C. EP—A—033 016 refers to a process of foaming a resinous polymer containing anhydride groups with ammonium carbonate and ammonium bicarbonate as blowing agent.

It would be desirable if there were available an improved process for the preparation of alkenyl aromatic polymer foams which minimized the amount of halo-hydrocarbons released into the atmosphere and which results in a polymer foam suitable for thermal insulation and decoration.

It would also be desirable if there were available an improved process for the preparation of alkenyl aromatic polymer foams which permitted an increase in latitude in the operating conditions.

The object of the invention is solved by the process for the production of an alkenyl aromatic polymer foam having a density of 8—128 kg/$m^3$ by blending heat plastified polymer and an amount of 0.5 to 20 parts by weight per hundred parts polymer of a carbonate as blowing agent under pressure sufficient to prevent foaming at a temperature sufficiently high to decompose the carbonate blowing agent prior to the extrusion and subsequently extruding the blended mixture into a zone of lower pressure. This process is characterized in that (1) the polymer has a weight average molecular weight of 100,000 to 350,000 and has polymerized therein 99 to 70 parts by weight of alkenylaromatic monomer and 1 to 30 parts by weight of acrylic, methacrylic or itaconic acid or mixtures thereof (2) the blowing agent is sodium, magnesium, zinc, or ammonium carbonate or bicarbonate or mixtures thereof.

The foam has a plurality of closed gas filled cells, having an ion therein, the ion being selected from a group consisting of sodium, magnesium, zinc, ammonium and mixtures thereof.

Synthetic resinous thermoplastic foams resulting from the practice of the present invention are polymers containing polymers thereof alkenyl aromatic monomer and olefinically unsaturated acid wherein the alkenyl aromatic monomer is present in the proportion of from 99 to 70 parts by weight and the acid is present in a proportion of from 1 to 30 parts by weight. Preferable for most applications, the alkenyl aromatic monomer is present in a proportion of from 95 parts by weight to 80 parts by weight while the acid is present in a proportion of from 5 to 20 parts by weight and the weight average molecular weight of the alkenyl aromatic monomer and olefinically unsaturated acid containing polymer is from 100,000 to 350,000 as determined by gel permeation chromatography, and preferably from 150,000 to 300,000.

By the term "alkenyl aromatic monomer" is meant an alkenyl aromatic compound having the general formula

$$\mathrm{Ar{-}\overset{\overset{R}{|}}{C}{=}CH_2}$$

wherein Ar represents an aromatic hydrocarbon radical, or an aromatic halohydrocarbon radical of the benzene series, and R is hydrogen or the methyl radical, or other alkenyl aromatic compounds. Examples are styrene, α-methylstyrene, o-methylstyrene, m-methylstyrene, p-methylstyrene, ar-ethylstyrene, ar-vinylxylene, ar-chlorostyrene or ar-bromostyrene.

In the preparation of foams in accordance with the present invention, the copolymers employed need not be limited only to two monomers such as styrene and acrylic acid. A portion of the styrene may readily be replaced with alkyl styrenes such as methylstyrene, t-butylstyrene, bromostyrene, chlorostyrene; as well as acrylonitrile, methacrylonitrile, methylmethacrylate in a proportion generally up to about 20 weight percent of the total polymer. The acrylic acid portion may be wholly or partially replaced with methacrylic acid, itaconic acid.

Blowing agents used in the practice of the present invention include sodium bicarbonate, sodium carbonate, magnesium carbonate, magnesium bicarbonate, ammonium carbonate, ammonium bicarbonate, and zinc carbonate or zinc bicarbonate or mixtures thereof in a proportion of 0.5 to 20 parts by weight per hundred parts by weight of polymer, and combinations of sodium bicarbonate, zinc carbonate, ammonium carbonate with hydrocarbons or fluorocarbons, and combinations of sodium bicarbonate with sodium methoxide.

Suitable volatile fluid foaming agents are well known in the art.

Desirably the density of the foam in accordance with the invention is from 8 to 128 kg/$m^3$ and preferably in the range of 16 to 90 kg/$m^3$. Desirably the cell size of the foam is from about 0.1 to about 5 millimeters and advantageously from about 0.1 to about 2.5 millimeters.

Suitable styrene-acrylic acid copolymers for the practice of the present invention are provided by a coil polymerization technique set forth in U.S. Letters Patent 3,035,033 to W. K. Schweitzer. A like procedure can be used to prepare other copolymers for the practice of the present invention.

Generally, preparation of foam in accordance with the present invention is accomplished by intimately admixing particulate resin with the desired particulate blowing agent, for example a styrene-acrylic acid resin having a particle diameter of 0.25 cm (0.1 inch) and powdered sodium bicarbonate. In order to provide uniform admixture it is often desirable to apply to the resin an adhering aid such as a 1:1 by weight mixture of dibutylphthalate and alphamethylstyrene. Usually, the particulate resin is placed into a suitable dry blender, the adhering aid added, the material tumbled for a length of time generally known only to those familiar with the particular dry blender, the powdered foaming agent such as sodium bicarbonate is added and then the mixture further tumbled to provide a dispersion of sodium bicarbonate over a surface of the resin and because of the presence of the adhered aid, stratification of the resin of sodium bicarbonate does not occur under normal handling conditions. The dry blend of resin and foaming agent is then passed to an extruder where it is heat plastified, usually at a temperature of about 250°C, thoroughly mixed, cooled and extruded into a zone of lower pressure where it foams and cools to a self-supporting shape.

Generally, it is desirable to maintain the heat plastified foaming agent containing resinous composition under sufficient pressure that foaming is prevented until the heated mobile gel is exposed to atmospheric pressure. The preparation of foams such as foam plank is well known and is set forth in the following U.S. Letters Patents: 2,669,751; 2,740,157; 2,838,801; 3,751,377; 3,817,669; 3,954,929; 3,897,528; and 3,914,085; the preparation of foamed sheet by extrusion is disclosed in the following U.S. Letters Patent: 2,917,217; 3,151,192; 3,648,462; 3,311,681; 3,391,051; 3,560,600. All molecular weights are determined by gel permeation chromatography.

The invention is further illustrated but not limited by the following examples.

Employing a 1.91 cm (¾ inch) extruder having a feed zone heated to a temperature of about 210°C, an intermediate zone heated to about 180°C, and a die heated to about 150°C, a first series of foam samples were produced utilizing a styrene-acrylic acid copolymer containing 8.0 weight percent acrylic acid and having a molecular weight of about 260,000; varying quantities of sodium bicarbonate were employed as blowing agent and varying screw speeds were utilized.

A second series of samples were prepared using styrene-acrylic acid copolymer of about 8 weight percent acrylic acid, the remainder styrene and having a molecular weight of 210,000 gram moles. Die temperature, die pressure and screw speed were recorded; foam samples were gathered, aged in air for a period of about a week and the external skin removed prior to determining the foam density which is recorded in kg/$m^3$. Cell size was measured using the procedure ASTM D 3576 and the percentage of open cells was determined by ASTM D 2856-A and the heat distortion temperature was determined by modified ASTM Test D 2126-75. This test employs a one hour exposure at each temperature and the heat distortion temperature is the maximum temperature giving a linear dimension change of less than two percent. The results are set forth in Table I wherein the following abbreviations are employed:

| | |
|---|---|
| SAA | Styrene acrylic acid copolymer |
| pph | parts by weight per hundred parts of polymer |
| °C | degrees Celsius |
| rpm | revolutions per minute |
| kg/$m^3$ | kilograms per cubic meter |
| mm | millimeters |
| Temp. | Temperature |

TABLE I
Properties of SAA copolymer (8% AA) foams expanded with sodium bicarbonate

| $NaHCO_3$ level (pph) | Die temp. (°C) | Screw speed (rpm) | Foam density PCF / Foam density kg/m³ Aged with skin | Aged skin off | Cell size (mm) | Open cell (%) | Heat distortion temp. (°C) |
|---|---|---|---|---|---|---|---|
| | | | 260M M. W. SAA | | | | |
| 2.33 | 145 | 40 | 142.2 | 126.4 | 0.81 | 52.7 | 109 |
| 4.66 | 145 | 20 | 67.7 | 59.5 | 0.92 | 30.1 | 109 |
| 9.32 | 150 | 30 | 54.2 | 33.4 | 0.47 | 0.94 | 103 |
| 13.98 | 150 | 40 | 42.24 | 25.3 | 0.37 | 0.51 | 110 |
| 18.64 | 150 | 40 | 36.8 | 24.0 | 0.53 | 46.3 | 109 |
| | | | 210M M. W. SAA | | | | |
| 2.33 | 150 | 40 | 93.9 | 56.5 | 0.74 | 32.4 | 121 |
| 4.66 | 150 | 30 | 58.6 | 48.8 | 0.56 | 9.6 | 109 |
| 6.99 | 155 | 30 | 49.3 | 30.4 | 0.50 | 30.9 | 115 |
| 9.32 | 150 | 30 | 44.6 | 38.4 | 0.51 | 4.4 | 109 |
| 13.98 | 145 | 40 | 41.0 | 32.2 | 0.27 | 8.0 | 109 |

For purposes of comparison a polystyrene having a weight average molecular weight of about 200,000 was treated in a generally similar manner. The results are set forth in Table II.

TABLE II
Properties of polystyrene foams expanded with sodium bicarbonate

| Level (pph) | Die temp. (°C) | Screw speed (rpm) | Foam density kg/m³ Aged with skin | Aged skin off | Cell size (mm) | Open cell (%) | Heat distortion temp. (°C) |
|---|---|---|---|---|---|---|---|
| 2 | 135 | 40 | 128.0 | 111.0 | 0.81 | 49.5 | 96 |
| 5 | 133 | 40 | 125.0 | 107.0 | 0.41 | 69.3 | 92 |
| 7 | 121 | 40 | 96.0 | 85.3 | 0.43 | 54.7 | 92 |
| 10 | 115 | 40 | 77.0 | 73.9 | 0.45 | 67.0 | 92 |
| 15 | 115 | 40 | 92.5 | 81.4 | 0.48 | 72.5 | 89 |
| 20 | 115 | 40 | 91.4 | 84.2 | 0.43 | 70.4 | 89 |

Results show that a lower density foam having a substantially closed cell structure and a higher heat distortion temperature is achieved by expanding styrene/acrylic acid copolymer with sodium bicarbonate. On the other hand, polystyrene is not expanded to a low density foam by sodium bicarbonate and the polystyrene foam has a high open cell content over the entire range of sodium bicarbonate level.

A styrene-maleic anhydride copolymer containing 20 percent maleic anhydride polymerized therein, with a solution viscosity of 5.6 mPa · s at 25°C in a 10 percent methylethylketone solution was foamed employing sodium bicarbonate as well as a styrene-acrylonitrile polymer which contained 75 weight percent styrene with 25 weight percent acrylonitrile were foamed for comparative purposes. The styrene-maleic anhydride copolymer being designated by the abbreviations SMA and styrene-acrylonitrile polymer, by SAN. These styrene copolymers do not produce a low-density closed cell foam as shown in Table III. From the results, it appears that the response of the styrene-acrylic acid copolymer to the sodium bicarbonate blowing agent is unique.

TABLE III

Properties of other polymer foams expanded with sodium bicarbonate

| Polymer type | $NaHCO_3$ level (pph) | Die temp. (°C) | Screw speed (rpm) | Foam density fresh with skin $kg/m^3$ | Cell size (mm) | Open cell (%) | Heat distortion temp. (°C) |
|---|---|---|---|---|---|---|---|
| SMA | 14 | 190 | 40 | 99.8 | 0.59 | 79.1 | >125 |
| SAN | 14 | 150 | 40 | 499.2 | | | |

A series of extrusions were made using an 8 percent acrylic acid, 92 percent styrene copolymer having a molecular weight of about 210,000 and varying levels of trichlorofluoromethane (F-11) and varying levels of sodium bicarbonate. The results are set forth in Table IV.

TABLE IV

Properties of SAA copolymer foams expanded with F-11/$NaHCO_3$ binary blowing agents

| F-11 level (pph) | $NaHCO_3$ level (pph) | Die temp. (°C) | Screw speed (rpm) | Foam density ($kg/m^3$) Aged skin off | Cell size (mm) | Open cell (%) | Remarks |
|---|---|---|---|---|---|---|---|
| 8.2 | 0 | 160 | 60 | 51.7 | 0.81 | 47.6 | 0.5 pph talc was added |
| 8.2 | 0 | 158 | 60 | 46.2 | 0.74 | 57.1 | 1.0 pph talc was added |
| 8.2 | 1 | 155 | 40 | 35.6 | 0.90 | 5.0 | |
| 8.2 | 1 | 150 | 60 | 30.4 | 0.81 | 1.6 | |
| 8.2 | 2 | 140 | 40 | 25.0 | 0.40 | 3.8 | |
| 8.2 | 2 | 140 | 60 | 24.3 | 0.43 | 41.3 | |
| 8.2 | 3 | 135 | 40 | 30.2 | 0.56 | 40.6 | |
| 8.2 | 3 | 130 | 60 | 29.1 | 0.58 | 38.9 | |
| 8.2 | 4 | 130 | 40 | 24.3 | 0.51 | 2.8 | |
| 8.2 | 4 | 130 | 60 | 23.8 | 0.54 | 41.9 | |
| 8.2 | 5 | 125 | 40 | 23.8 | 0.39 | 4.7 | |
| 8.2 | 5 | 125 | 60 | 30.7 | 0.49 | 44.2 | |
| 8.2 | 6 | 125 | 40 | 25.9 | 0.34 | 0.2 | |
| 8.2 | 6 | 125 | 60 | 23.4 | 0.35 | 43.7 | |
| 17.8 | 0 | 160 | 40 | 24.3 | 0.62 | 5.7 | |
| 17.8 | 1 | 160 | 40 | 23.4 | 0.90 | 0 | |
| 17.8 | 2 | 134 | 60 | 19.5 | 0.43 | 7.9 | |
| 17.8 | 3 | 128 | 60 | 19.5 | 0.40 | 0.3 | |
| 17.8 | 4 | 120 | 60 | 21.8 | 0.35 | 3.1 | |
| 17.8 | 5 | 120 | 60 | 22.9 | 0.45 | 5.9 | |
| 17.8 | 6 | 116 | 80 | 14.1 | 0.25 | 1.0 | |

A similar experiment employing a volatile fluid foaming agent was performed for comparative purposes utilizing polystyrene and an 80/20 parts by weight mixture of trichlorofluoromethane/pentane with varying levels of sodium bicarbonate. The results are set forth in Table V.

TABLE V
Properties of polystyrene foam expanded with combined blowing agents of 80/20 F-11/pentane and $NaHCO_3$

| F-11/ pentane level (pph) | $NaHCO_3$ level (pph) | Die temp. (°C) | Screw speed (rpm) | Foam density (kg/m$^3$) Aged skin off | Cell size (mm) | Open cell (%) | Remarks |
|---|---|---|---|---|---|---|---|
| 9.8 | 0 | 110 | 40 | 53.0 | 0.56 | 3.1 | 1 pph talc was added |
| 9.8 | 0 | 110 | 60 | 45.3 | 0.48 | 0.8 | 1 pph talc was added |
| 9.8 | 0 | 110 | 80 | 42.7 | 0.68 | 0.1 | 1 pph talc was added |
| 9.8 | 1 | 110 | 40 | 42.2 | 0.74 | 0.2 | |
| 9.8 | 1 | 110 | 60 | 36.6 | 0.68 | 1.7 | |
| 9.8 | 1 | 110 | 80 | 40.3 | 0.65 | 0.2 | |
| 9.8 | 2 | 110 | 40 | 40.3 | 0.51 | 0 | |
| 9.8 | 2 | 110 | 60 | 35.4 | 0.58 | 7.3 | |
| 9.8 | 2 | 110 | 80 | 36.6 | 0.62 | 10.6 | |
| 9.8 | 3 | 110 | 40 | 35.5 | 0.51 | 0 | |
| 9.8 | 3 | 110 | 60 | 35.5 | 0.39 | 7.6 | |
| 9.8 | 3 | 110 | 80 | 40.3 | 0.48 | 0 | |
| 9.8 | 3 | 110 | 100 | 40.6 | 0.54 | 50.3 | |
| 9.8 | 4 | 110 | | (Frozen at the die) | | | |
| 9.8 | 5 | 125 | 40 | — | 0.60 | 80.8 | |
| 9.8 | 6 | 120 | 40 | 32.2 | 0.70 | 59.9 | |
| 9.8 | 6 | 120 | 60 | 29.14 | 0.58 | 49.9 | |
| 9.8 | 6 | 120 | 80 | 33.3 | 0.65 | 38.9 | |

A number of mixtures containing varying quantities of sodium methoxide and sodium bicarbonate were extruded to form foams with a copolymer of 8 weight percent acrylic acid and the remainder being styrene having a weight average molecular weight of 210,000. The results are set forth in Table VI.

TABLE VI

Properties of SAA copolymer foams expanded with $NaOCH_3/NaHCO_3$ mixed blowing agents

| $NaOCH_3$ level (pph) | $NaHCO_3$ level (pph) | Die temp. (°C) | Screw speed (rpm) | Conversion to salt (mole%) | Foam density (kg/m³ Aged skin off | Cell size (mm) | Open cell (%) | Heat distortion temp.(°C) |
|---|---|---|---|---|---|---|---|---|
| 3 | 0 | 155 | 40 | 46 | 37.1 | 1.81 | 0.5 | 115 |
| 1.5 | 4.66 | 160 | 40 | 43 | 31.7 | 0.63 | 0.8 | 115 |
| 1.5 | 6.99 | 155 | 40 | 68 | 36.5 | 0.45 | 0 | 115 |
| 1.0 | 6.99 | 155 | 60 | 51 | 29.8 | 0.54 | 2.4 | 115 |
| 0.6 | 6.99 | 160 | 40 | 48 | 27.7 | 0.48 | 0 | 115 |

A variety of other materials were extruded with a copolymer of 8 weight percent of acrylic acid and the remainder being styrene. The polymer had a molecular weight of about 210,000. The results are set forth in Table VII.

TABLE VII

Properties of SAA copolymer foams expanded with other metal compounds

| Compound Type | Level (pph) | F-11 level (pph) | Die Temp. (°C) | Screw Speed (rpm) | Conversion To Salt (mole%) | Foam density (kg/m³) With skin | Skin off | Cell Size (mm) | Open Cell (%) | Heat Distortion temp. (°C) |
|---|---|---|---|---|---|---|---|---|---|---|
| $Na_2CO_3$ | 9 | | 150 | 40 | 54 | 118 | | 0.63 | 54.0 | 115 |
| $Na_2CO_3 \cdot H_2O$ | 5 | | 150 | 30 | | 76.3 | 52.5 | 1.01 | 55.5 | |
| | 7 | | 150 | 30 | | 57.6 | 44.5 | 0.81 | 6.2 | |
| | 9 | | 150 | 30 | | 49.6 | 36.5 | 0.54 | 2.8 | |
| $Na_2CO_3$ | 7.5 | 7.5 | 135 | 40 | | 59.4 | 40.3 | 0.26 | 0.8 | |
| $Na_2CO_3 \cdot H_2O$ | 7 | 7.5 | 135 | 40 | | 39.2 | 26.6 | 0.77 | 0 | |
| $ZnCO_3$ | 7 | 7.5 | 135 | 40 | | 65.8 | 52.3 | 0.81 | 46.0 | |

Note that sodium carbonate, sodium carbonate monohydrate and zinc carbonate gave satisfactory foams while with the addition of 7.5 parts per hundred of trichlorofluoromethane, all three compounds work as an effective secondary blowing agent.

A series of extrusions were performed employing styrene-acrylic acid copolymers of varying acrylic acid content and varying sodium bicarbonate content. The results are set forth in Table VIII which establishes that good foams of low density and reasonable open cell content can be obtained over a wide range of compositions.

TABLE VIII
Effect of acrylic acid level on the processability and properties of SAA copolymer foams expanded with $NaHCO_3$

| $NaHCO_3$ level (pph) | Die temp. (°C) | Screw speed (rpm) | Foam density ($kg/m^3$) Aged with skin | Aged skin off | Cell size (mm) | Open cell (%) | Heat distortion temp. (°C) |
|---|---|---|---|---|---|---|---|
| | | | | 5%AA SAA Copolymer | | | |
| 2 | 150 | 30 | 110.9 | 73.9 | 0.68 | 60.8 | 113 |
| 5 | 145 | 20 | 72.3 | 58.6 | 0.58 | 5.6 | 107 |
| 10 | 145 | 20 | 60.5 | 38.4 | 0.54 | 5.9 | 107 |
| 15 | 145 | 25 | 59.8 | 38.4 | 0.37 | 6.5 | 106 |
| | | | | 10%AA SAA Copolymer | | | |
| 2 | 148 | 30 | 106.7 | 75.8 | 0.65 | 37.8 | 118 |
| 5 | 145 | 30 | 59.2 | 49.4 | 0.60 | 15.7 | 118 |
| 10 | 147 | 30 | 59.8 | 46.7 | 0.49 | 2.9 | 113 |
| 15 | 148 | 30 | 66.6 | 45.3 | 0.40 | 3.1 | 113 |
| | | | | 15%AA SAA Copolymer | | | |
| 2 | 150 | 30 | 94.1 | 67.7 | 0.77 | 28.8 | 124 |
| 5 | 150 | 30 | 66.7 | 41.8 | 0.62 | 23.4 | 121 |
| 10 | 150 | 30 | 57.1 | 32.2 | 0.40 | 4.5 | 124 |
| 15 | 152 | 30 | 69 | 51.4 | 0.30 | 1.0 | 124 |
| | | | | 20%AA SAA Copolymer | | | |
| 2 | 170 | 30 | 58.7 | 42.1 | 0.81 | 4.7 | 133 |
| 5 | 170 | 30 | 52.5 | 38.4 | 0.68 | 5.6 | 133 |
| 10 | 170 | 30 | 46.9 | 32.2 | 0.51 | 6.4 | 135 |
| 15 | 170 | 30 | 36.8 | 32.2 | 0.40 | 7.9 | 133 |

An 8 weight percent acrylic acid styrene copolymer was foamed under a variety of conditions and ammonium bicarbonate levels with trichlorofluoromethane and ethyl chloride. The results are set forth in Table IX, from which it can be seen that very little bicarbonate is equivalent to a substantial quantity of the volatile fluid foaming agent.

TABLE IX
Properties of SAA copolymer foams expanded with ammonium bicarbonate and mixtures with physical blowing agents

| Physical blowing agent (type) | (pph) | $NH_4HCO_3$ level (pph) | Die temp. (°C) | Screw speed (rpm) | Foam density ($kg/m^3$) With skin | Skin off | Cell size (mm) | Open cell (%) |
|---|---|---|---|---|---|---|---|---|
| | | | | | 3/4′ Extruder | | | |
| None | | 2 | 150 | 40 | 133.6 | | 2.70 | 66.8 |
| | | 5 | 145 | 20 | 71.4 | | 3.24 | 71.6 |
| | | 7 | 150 | 20 | 89.9 | | 3.24 | 62.4 |
| F-11 | 7.5 | 0 | 135 | 40 | 156.5 | 67.9 | 1.36 | 10.2 |
| | 7.5 | 0 | 135 | 40 | 82.2 | 51.8 | 0.6 | 62.6* |
| | 7.5 | 1 | 135 | 40 | 51.4 | 34.08 | 1.35 | 6.2 |
| | 7.5 | 2 | 135 | 40 | 40.3 | 28.6 | 1.47 | 3.0 |
| | 7.5 | 3 | 135 | 40 | 37.8 | 21.8 | 1.35 | 17.5 |
| | 16.1 | 0 | 140 | 40 | 49.1 | 32.0 | 2.31 | 3.7 |
| | 16.1 | 1 | 135 | 40 | 35.8 | 30.7 | 1.01 | 2.9 |
| | 16.1 | 2 | 135 | 40 | 30.9 | 25.4 | 0.71 | 0 |
| | 16.1 | 5 | 135 | 40 | (Collapsed due to over expansion) | | | |
| | | | | | 1 1/4″ Extruder | | | |
| $C_2H_5Cl$ | 8.2 | 0 | 142.5 | | 67.3 | 44 | 4.05 | 0 |
| | 8.3 | 1 | 142.5 | | 47.4 | 37.3 | 1.08 | 0.5 |
| | 8.3 | 2 | 142.5 | | 49.9 | 32.5 | 1.47 | 0 |
| | 8.3 | 4 | 143 | | 42.4 | 25.0 | 1.80 | 1.7 |
| | 13.0 | 0 | 142 | | 31.7 | 27.7 | 2.70 | 10.3 |

*0.5 pph talc was added for cell size control.

In a manner similar to the foregoing illustration, varying quantities of hydrated magnesium carbonate were evaluated alone and in combination with trichlorofluoromethane, (8 weight percent acrylic acid resin, the remaining being styrene). The results are set forth in Table X.

TABLE X
Properties of SAA copolymer foams expanded with magnesium carbonate and its mixtures with F-11

| F-11 level (pph) | Magnesium carbonate (pph) | Die temp. (°C) | Screw speed (rpm) | Foam density ($kg/m^3$) With skin | Skin off | Cell size (mm) | Open cell (%) |
|---|---|---|---|---|---|---|---|
| 8.0 | 0 | 150 | 40 | 58.6 | 51.4 | 0.46 | 47.0* |
| 8.0 | 1 | 145 | 40 | 55.4 | 44.0 | 0.54 | 41.8 |
| 8.0 | 2 | 135 | 40 | 51.0 | 41.4 | 0.58 | 56.1 |
| 8.0 | 3 | 130 | 60 | 51.4 | 38.4 | 0.54 | 60.5 |
| 8.0 | 4 | 130 | 40 | 56.5 | 45.8 | 0.49 | 46.2 |
| 8.0 | 5 | 130 | 40 | 55.4 | 44.3 | 0.58 | 37.2 |
| 8.0 | 6 | 128 | 60 | 49.4 | 36.8 | 0.60 | 50.2 |

*1 pph talc was added for cell size control.

Foamed sheet was prepared using a one-inch extruder and tubing die wherein the tube was inflated with air to provide a foamed sheet of a desired thickness. The die diameter was 3.18 cm and the die gap was 0.635 mm. The blowing agent used was varying amounts of sodium bicarbonate. The copolymer employed was of styrene and acrylic acid which contained about 8 weight percent acrylic acid, the remainder being

styrene. The polymer was extruded at about 4.08 kg/h (nine pounds per hour). The screw speed and temperatures were adjusted for optimum results. The results are set forth in Table XI.

TABLE XI
Properties SAA foam sheet prepared on a one inch blown film line using sodium bicarbonate as the blowing agent

| $NaHCO_3$ level (pph) | Gel temp. (%) | Screw speed (rpm) | Foam width (in) | Thick-ness (in) | Foam density (kg/$m^3$) | Foam cell size (mm) | Open cell (%) | Tensile strength $10^3$ N/$mm^2$ (MD) | (10$^3$ MPa) (CD) | Percent Elongation (MD) | (CD) |
|---|---|---|---|---|---|---|---|---|---|---|---|
| 3.0 | 210 | 44 | 7.4 | 0.030 | 109.6 | 0.68 | 24.5 | 44.7 | 31.6 | 2.01 | 1.70 |
| 5.0 | 209 | 48 | 11.5 | 0.027 | 121.0 | 0.90 | 31.2 | 56.4 | 29.7 | 3.21 | 3.27 |
| 7.0 | 213 | 60 | 8.6 | 0.036 | 97.8 | 0.81 | 51.1 | 30.7 | 10.8 | 1.68 | 3.36 |

Notes: MD stands for machine direction and CD for cross direction.

Employing the apparatus of the previous illustration, foam was prepared from a copolymer of 92 weight percent vinyl toluene and 8 weight percent acrylic acid. The vinyl toluene was about 60 weight percent meta-isomer and 40 weight percent para-isomer. The polymer had a molecular weight of 180,000; 7 parts by weight of sodium bicarbonate were employed as blowing agent to 100 parts by weight of the resin. The die temperature was 150°C, screw speed was 30 revolutions per minute. The resultant foam had a density of 72.6 kg/$m^3$; the cell size was about 0.45 millimeters and was 21.2 percent open cell. For a comparison, a homopolymer of paravinyl toluene having a molecular weight of about 300,000 was similarly treated. The foam with skin had a density of 97.7 kg/$m^3$; cell size of 0.62 millimeters, and was 37.8 percent open cell.

In a manner similar to the foregoing illustrations, other foams are readily prepared employing sodium bicarbonate, alone or in combination with a volatile fluid foaming agent to prepare foam plank or foam sheet when the hereinbefore described styrene-acrylic acid, styrene-methacrylic acid or styrene-itaconic acid vinyl toluene acrylic acid copolymers are utilized.

**Claims**

1. A process for the preparation of an alkenyl aromatic polymer foam having a density of 8—128 kg/$m^3$ by blending heat plastified polymer and an amount of 0.5 to 20 parts by weight per hundred parts polymer of a carbonate as blowing agent under pressure sufficient to prevent foaming at a temperature sufficiently high to decompose the carbonate blowing agent prior to the extrusion and subsequently extruding the blended mixture into a zone of lower pressure characterized in that (1) the polymer has a weight average molecular weight of 100,000 to 350,000 and has polymerized therein 99 to 70 parts by weight of alkenylaromatic monomer and 1 to 30 parts by weight of acrylic, methacrylic or itaconic acid or mixtures thereof, (2) the blowing agent is sodium, magnesium, zinc, or ammonium carbonate or bicarbonate or mixtures thereof.

2. The process of Claim 1 wherein hydrocarbons and/or fluorocarbons are used as additional blowing agent.

3. The process of Claim 1 wherein the molecular weight of the polymer is 150,000 to 300,000.

4. The process of Claims 1 to 3 wherein the alkenyl aromatic monomer is styrene.

5. The process of Claims 1 to 3 wherein the alkenyl aromatic monomer is vinyl toluene.

6. The process of Claim 1 wherein the acid is present in a proportion of 5 to 20 parts by weight based on weight of the polymer.

7. The process of Claim 1 wherein the polymer is a polymer of styrene and acrylic acid.

8. The process of Claim 4 wherein a portion up to 20 weight % based on the total polymer of the styrene being replaced by alkylstyrenes, acrylonitrile, methacrylonitrile or methylmethacrylate.

9. The process of Claim 1 wherein a portion up to 20 weight % based on the total polymer of the alkenylaromatic monomer being replaced by acrylonitrile or methylmethacrylate.

10. The process of Claim 1 wherein sodium bicarbonate is used as blowing agent.

11. The process of Claim 10 wherein the sodium bicarbonate being mixed with sodium methoxide.

12. The process of Claim 1 wherein the foam has a density of 16—90 kg/$m^3$ and an average cell size of about 0.1 to 2.5 millimeters.

13. The process of Claims 7 and 12 wherein the polymer has polymerized therein from 95 to 80 parts by weight of styrene and 5 to 20 parts by weight of acrylic acid.

**Patentansprüche**

1. Verfahren zur Herstellung eines alkenylaromatischen Polymerschaumes mit einer Dichte von 8—128 kg/$m^3$, durch Mischen mittels Wärme plastisch gemachtem Polymer und einer Menge von 0,5—20 Gewichtsteilen pro 100 Gewichtsteile Polymer eines Carbonattreibmittels unter ausreichendem Druck, um Aufschäumen zu verhindern bei einer Temperatur, die ausreicht, um das Carbonattreibmittel vor dem Extrudieren zu zersetzen und anschließendes Extrudieren der Mischung in eine Zone verringerten Druckes, dadurch gekennzeichnet, daß

(1) das Polymer ein gewichtsmittleres Molekulargewicht von 100 000 bis 350 000 aufweist und 99—70 Gewichtsteile alkenylaromatisches Monomer und 1—30 Gewichtsteile Acrylsäure, Methacrylsäure oder Itaconsäure oder Mischungen derselben einpolymerisiert enthält.

(2) das Treibmittel Natrium, Magnesium, Zink oder Ammoniumcarbonat oder bicarbonat oder Mischungen derselben ist.

2. Verfahren nach Anspruch 1, dadurch gekennzeichnet, daß Kohlenwasserstoffe und/oder fluorierte Kohlenwasserstoffe als zusätzliches Treibmittel verwendet werden.

3. Verfahren nach Anspruch 1, dadurch gekennzeichnet, daß das Molekulargewicht des Polymeren 150 000 bis 300 000 beträgt.

4. Verfahren nach Ansprüchen 1 bis 3, dadurch gekennzeichnet, daß das alkenylaromatische Monomer Styrol ist.

5. Verfahren nach Ansprüchen 1 bis 3, dadurch gekennzeichnet, daß das alkenylaromatische Monomer Vinyltoluol ist.

6. Verfahren nach Anspruch 1, dadurch gekennzeichnet, daß die Säure in einem Verhältnis von 5 bis 20 Gewichtsteilen pro Gewicht des Polymeren vorhanden ist.

7. Verfahren nach Anspruch 1, dadurch gekennzeichnet, daß das Polymere eine Polymer aus Styrol und Acrylsäure ist.

8. Verfahren nach Anspruch 4, dadurch gekennzeichnet, daß eine Anteil von bis zu 20 Gewichtsprozent bezogen auf Gesamtpolymer des Styrol durch Alkylstyrol, Acrylnitril, Methacrylnitril oder Methylmethacrylat ersetzt ist.

9. Verfahren nach Anspruch 1, dadurch gekennzeichnet, daß eine Anteil von bis zu 20 Gewichtsprozent bezogen auf Gesamtpolymer des alkenylaromatischen Monomers durch Acrylonitril oder Methylmethacrylat ersetzt ist.

10. Verfahren nach Anspruch 1, dadurch gekennzeichnet, daß als Triebmittel Natriumbicarbonat verwendet wird.

11. Verfahren nach Anspruch 10, dadurch gekennzeichnet, daß Natriumcarbonat mit Natriummethylat gemischt ist.

12. Verfahren nach Anspruch 1, dadurch gekennzeichnet, daß der Schaum eine Dichte von 16 bis 90 kg/$m^3$ und eine mittlere Zellengröße von etwa 01 bis 2,5 mm aufweist.

13. Verfahren nach Ansprüchen 7 und 12, dadurch gekennzeichnet, daß das Polymere von 95 bis 80 Gewichtsteile Styrol und 5 bis 20 Gewichtsteile Acrylsäure einpolymerisiert enthält.

**Revendications**

1. Procédé de préparation d'une mousse de polymére alcenyl-aromatique, ayant une densite de 8 à 128 kg/$m^3$ par melange d'un polymère plastifié à chaud et d'une proportion de 0,5 à 20 parties en poids, pour 100 parties de polymére, d'un carbonate comme agent gonflant, sous une pression suffisante pour éviter l'expansion, à une temperature suffisamment élevée pour decomposer l'agent gonflant carbonate, avant l'extrusion, et extrusion subséquente du mélange dans une zone de pression inférieure, caractérisé en ce que (1) le polymère a une masse moléculaire moyenne de 100,000 à 350,000 et contient, à l'état polymèrisé, 99 à 70 parties en poids de monomère alcényl-aromatique et 1 à 30 parties en poids d'acide acrylique, méthacrylique ou itaconique, ou leurs mélanges, (2) l'agent gonflant est du carbonate ou bicarbonate de sodium, de magnesium, de zinc ou d'ammonium, ou leurs mélanges.

2. Procédé selon la revendication 1, dans lequel les hydrocarbures et/ou des fluorocarbures sont utilisés comme agent gonflant supplémentaire.

3. Procédé selon la revendication 1, dans lequel le poids moléculaire du polymère est de 150,000 à 300,000.

4. Procédé selon les revendications 1 à 3, dans lequel le monomère alcènyl-aromatique est le styrène.

5. Procédé selon les revendications 1 à 3, dans lequel le monomère alcènyl-aromatique est le vinyl-toluène.

6. Procédé selon la revendication 1, dans lequel l'acide est present dans une proportion de 5 à 20 parties en poids, par rapport au poids du polymère.

7. Procédé selon la revendication 1, dans lequel le polymére est un polymère de styréne et d'acide acrylique.

8. Procédé selon la revendication 4, dans lequel une fraction allant jusqu'à 20% en poids, par rapport à la totalité du polymère, du styrène est remplacée par des alkylstyrenes, l'acrylonitrile, le méthacrylonitrile ou le méthacrylate de méthyle.

9. Procédé selon la revendication 1, dans lequel une fraction allant jusqu'à 20% en poids, par rapport à la totalité du polymère, du monomère alcènyl-aromatique est remplacée par l'acrylonitrile ou le methacrylate de méthyle.

10. Procédé selon la revendication 1, dans lequel du bicarbonate de sodium est utilisé comme agent gonflant.

11. Procédé selon la revendication 10, dans lequel le bicarbonate de sodium est mélangé avec du méthylate de sodium.

12. Procédé selon la revendication 1, dans lequel la mousse a une densité de 16—90 kg/m$^3$ et une dimension moyenne des alvéoles d'environ 0,1 à 2,5 mm.

13. Procédé selon les revendications 7 et 12, dans lequel le polymère contient, à l'état polymèrisé, de 95 à 80 parties en poids de styrène et 5 à 20 parties en poids d'acide acrylique.